# EUROPÄISCHE PATENTANMELDUNG

(11) **EP 0 561 315 A1**
(43) Veröffentlichungstag der Anmeldung: **22.09.1993**
(21) Anmeldenummer: 93104138.8
(22) Anmeldetag: 13.03.1993
(51) Int. Cl.: H02G 7/14

(54) **Dämpfung von Seilschwingungen**

(30) Priorität: 19.03.1992 DE 4208814
(71) Anmelder: ABB PATENT GmbH, D-68309 Mannheim (DE)
(72) Erfinder: Schwab, Adolf, Prof. Dr.-Ing., W-7500 Karlsruhe-Durlach (DE)
(74) Vertreter: Rupprecht, Klaus, Dipl.-Ing.

(57) **Zusammenfassung**

Die Erfindung betrifft ein Verfahren sowie eine Vorrichtung zur Dämpfung von Transversalschwingungen von Leiterseilen (12) einer elektrischen Freileitung mit an Isolatoren (14) angeordneten Aufhängepunkten (20) für die Leiterseile (12), wobei die vertikale Auslenkung der Aufhängepunkte (20) aus einer Ruhelage infolge der oszillierenden Bewegung des zugeordneten Leiterseiles (12) unter Verwendung einer Feder-Dämpfer-Anordnung (16) gedämpft wird und die Aufhängepunkte (20) jeweils von einer Rückstellkraft in ihre Ruhelage beaufschlagt werden.

## Beschreibung

Die Erfindung betrifft ein Verfahren zur Dämpfung von vertikalen Transversalschwingungen von Leiterseilen einer elektrischen Freileitung, mit an Isolatoren angeordneten Aufhängepunkten für die Leiterseile sowie eine Vorrichtung zur Durchführung dieses Verfahrens.

Freileitungen sind neben den Kräften aus dem Eigengewicht der Leiterseile durch Zusatzlasten, wie Eisbelag oder durch Wind, der die Leiterseile beaufschlagt, einer mechanischen Beanspruchung ausgesetzt. Weitere Zusatzlasten resultieren aus Schwingungen, welche unterschiedliche Ursachen haben. Besonders gravierend sind in überwiegend vertikaler Richtung beobachtete Transversalschwingungen der Leiterseile mit großer Amplitude und kleiner Frequenz, die auch als Seiltanzen bezeichnet werden und sich nachteilig auf alle Komponenten der Freileitung auswirken.

Aufgrund der Aufhängung der Leiterseile an schwenkbeweglichen Isolatoren, was zu einer Lageinstabilität der Aufhängepunkte der Leiterseile führt, besitzen die Seilbewegungen auch eine, meist deutlich geringere, horizontale Komponente. Hierdurch kann es zwischen den Leiterseilen unterschiedlicher Phasen zu Annäherungen kommen, so daß Kurzschluß-Lichtbögen entstehen können. Dies kann zu erheblichen Betriebsstörungen der Freileitung sowie zu deren erheblicher Beschädigung führen. Seiltanzen tritt nicht überall und ständig auf, sondern wird nur an bestimmten Trassenabschnitten der Freileitung beobachtet, wobei die Morphologie der Landschaft von Einfluß ist.

Alle bisher zur Verhinderung solcher Transversalschwingungen vorgeschlagenen und bekannt gewordenen Maßnahmen sind sehr aufwendig und in ihrer Wirkung begrenzt. So ist beispielsweise aus der DE-PS 39 24 855 bekannt, die Aufhängung und Abspannung der Leiterseile an den Masten völlig starr auszubilden und die einzelnen Spannfelder quasi voneinander zu entkoppeln. Da jedoch viele Freileitungsmaste selbst elastisch reagieren, hat diese Lösung nicht die gewünschte Wirkung. Darüberhinaus handelt es sich bei den bekannten Lösungen um aufwendige Spezialvorrichtungen, welche zu einer beträchtlichen Erhöhung der Errichtungszeit und Errichtungskosten einer Freileitungstrasse führen.

Ausgehend von diesem Stand der Technik ist es daher Aufgabe der Erfindung, ein Verfahren anzugeben, mit welchem die als Seiltanzen bezeichneten, überwiegend in vertikaler Richtung beobachteten Transversalschwingungen von Leiterseilen einer elektrischen Freileitung verhindert oder zumindest in ihren Auswirkungen begrenzt werden, sowie eine Vorrichtung zur Durchführung des Verfahrens anzugeben, die einfach aufgebaut, kostengünstig herstellbar und problemlos jederzeit in bereits bestehenden Freileitungen nachrüstbar ist.

Die Lösung der Aufgabe besteht darin, daß die vertikale Auslenkung der Aufhängepunkte der Leiterseile aus einer quasi stationären Mittellage in Folge der oszillierenden Vertikalbewegung des zugeordneten Leiterseiles gedämpft wird und der ausgelenkte Aufhängepunkt von einer Rückstellkraft in die Mittellage beaufschlagt wird.

Mit Hilfe dieses Verfahrens wird erreicht, daß die Transversalschwingungen des Leiterseiles nicht in einen stationären Zustand gelangen können, da durch die in Isolatorrichtung bewegliche, gedämpfte Seilaufhängung (beweglicher Schwingungsknoten) dank Absorption der vertikalen Bewegungsenergie einerseits und dank der Rückstellung der Aufhängepunkte der Leiterseile in eine definierte Mittellage andererseits die Oszillation des Leiterseils gestört wird.

Zur Durchführung dieses Verfahrens ist nach Anspruch 2 erfindungsgemäß eine Feder-Dämpfer-Anordnung vorgesehen, welche axial fluchtend am Isolator anschließt und an ihrem dem Isolator abgewandten Ende einen Aufhängepunkt aufweist.

Der Aufhängepunkt ist von einer Seilklemme zur Befestigung des Leiterseiles gebildet. Gemäß einer vorteilhaften Weiterbildung der erfindungsgemäßen Vorrichtung ist vorgesehen, daß in Ruhestellung der Feder der zugeordnete Dämpfer und mit ihm der Aufhängepunkt eine Mittellage einnimmt. Im Falle einer axialen Auslenkung der Feder-Dämpfer-Anordnung wird die die Auslenkung verursachende Energie einerseits im Dämpfer absorbiert, während andererseits die ausgelenkte Feder das Bestreben hat, ihre Ruhelage entsprechend der Mittellage einzunehmen und daher den ausgelenkten Aufhängepunkt mit einer Rückstellkraft beaufschlagt.

Eine vorteilhafte Ausgestaltung der Feder-Dampfer-Anordnung sieht vor, daß die Feder als Schraubenfeder ausgebildet ist, welche den zugeordneten Dämpfer zylindrisch umfaßt. Dabei sind jeweils die Enden von Feder und Dämpfer miteinander verbunden, so daß im Falle einer jeglichen Auslenkung der Feder-Dämpfer-Anordnung aus ihrer Ruhelage die Bewegungsdämpfung und Rückstellung resultiert.

Diese und weitere vorteilhafte Ausgestaltungen sind Gegenstand der Unteransprüche.

Anhand eines in der Zeichnung dargestellten Ausführungsbeispiels sollen die Erfindung, besondere vorteilhafte Ausgestaltungen und besondere Vorteil der Erfindung näher erläutert und beschrieben werden.

Es zeigen:
- Figur 1: eine erfindungsgemäße Vorrichtung,
- Figur 2: ein an mehreren Aufhängepunkten aufgehängtes Leiterseil und sein Schwingungsverhalten.

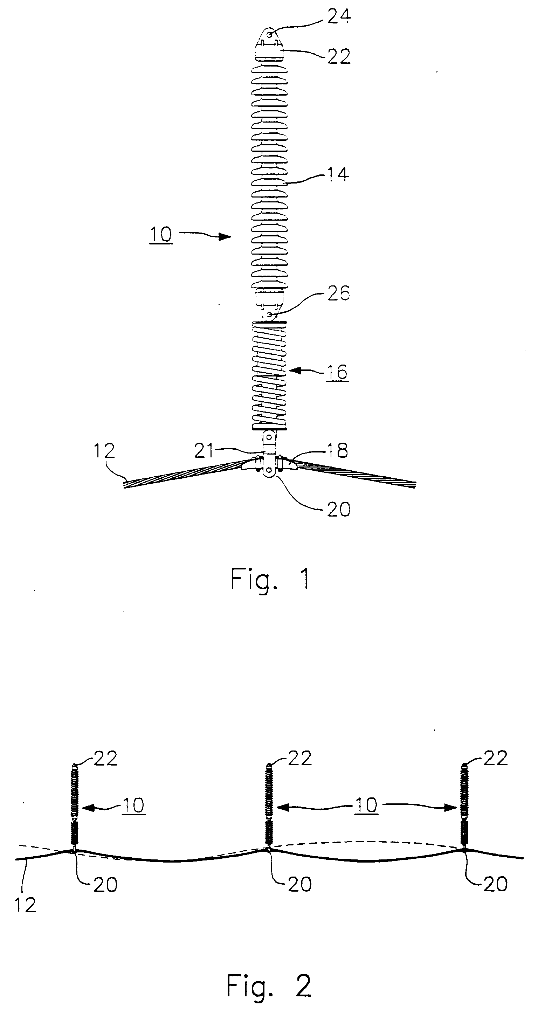

In Figur 1 ist eine Aufhängung 10 für ein Leiterseil 12 gezeigt, welche aus einem Isolator 14 und einer hieran axial fluchtend anschließenden Feder-Dämpfer-Anordnung 16 besteht. An dem in der Figur 1 nach unten weisenden Ende der Feder-Dämpfer-Anordnung 16 ist mittels einer Seilklemme 18 ein Aufhängepunkt 20 für das Leiterseil 12 gebildet, in welchem das Leiterseil 12 fixiert ist.

Die Aufhängung 10 ist üblicherweise mit dem nach oben weisenden Ende 22 des Isolators 14 an einer hier nicht näher gezeigten Traverse eines ebenfalls nicht dargestellten Tragmastes angelenkt, so daß die Aufhängung 10 um eine am oberen Ende 22 des Isolators 14 befindliche Öse 24, deren Schwenkachse quer zur Längserstreckung des Leiterseils 12 angeordnet ist, schwenkbar ist.

Die Verbindung zwischen dem Isolator 14 und der Feder-Dämpfer-Anordnung 16 ist ebenfalls mittels eines Schwenkgelenks 26 bewirkt.

Die zur Bildung des Aufhängepunktes 20 verwendete Seilklemme 18 ist von herkömmlicher Bauart.

Die Verbindung des Anschlußpunktes 20 an der Feder-Dämpfer-Anordnung 16 erfolgt mittels einer Doppellasche 21, die am unteren Ende der Feder-Dämpfer-Anordnung 16 angeschraubt ist.

In Figur 2 ist in ausschnittweiser Darstellung der Verlauf eines Leiterseiles 12 gezeigt, welches an erfindungsgemäßen Halterungen 10 befestigt ist, wobei bezüglich der näheren Ausgestaltung der Halterung 10 auf die in Figur 1 gegebene Erläuterung verwiesen wird.

In der in Figur 2 gezeigten Darstellung sind drei Aufhängepunkte 20 wiedergegeben, an welchen das Leiterseil 12 jeweils fixiert ist. Da die Halterung 10 jedoch schwenkbeweglich aufgehängt ist, d.h., um ihr oberes Ende 22 in der Erstreckungsrichtung des Leiterseiles 12 schwenken kann, können sich unter bestimmten Voraussetzungen im praktischen Betrieb die dargestellten Verläufe des Leiterseiles 12 ergeben. In periodischem Wechsel nimmt hierbei das Leiterseil 12, ausgehend von der im konkret gezeigten Leiterverlauf, die mittels gestrichelter Linie dargestellte Lage ein. Unverkennbar ist hierbei die Bildung sogenannter Wellenbäuche aufgrund transversaler Auslenkung des Leiterseiles 12, wodurch die eingangs beschriebenen Probleme im Betrieb von Freileitungen resultieren.

Die erfindungsgemäße Feder-Dämpfer-Anordnung 16 macht sich hierbei die beobachtete Erscheinung zu Nutze, daß die Schwingungsknoten während des Auftretens von als "Seiltanzen" bezeichneten Transversalwellen infolge der schwenkbeweglichen Aufhängepunkte 20 auch vertikal auslenken. Dabei wird die Bewegungsenergie des Leiterseiles 12 in vertikaler Richtung durch die in der Feder-Dämpfer-Anordnung integrierten Dämpfer absorbiert unter - abhängig vom Betrag der Energie - mehr oder weniger geringfügiger Auslenkung aus der Ruhelage und anschließend aufgrund der durch diese Auslenkung gespannten Feder der Feder-Dämpfer-Anordnung 16 mit einer Rückstellkraft in die ursprüngliche Ruhelage beaufschlagt.

Auf diese Weise, nämlich weil sowohl in horizontaler als auch in vertikaler Richtung ein stationärer, d.h. ortsunveränderlicher, Aufhängungspunkt 20 nicht besteht und das gleichzeitig federelastisch-dämpfende Verhalten der Feder-Dämpfer-Anordnung 16 sich störend auf die Entstehung von Schwingungen auswirkt, kann das Seiltanzen in seinen Auswirkungen wirksam begrenzt werden.

## Patentansprüche

1. Dämpfung von Transversalschwingungen von Leiterseilen einer elektrischen Freileitung, mit an Isolatoren angeordneten Aufhängepunkten für die Leiterseile, dadurch gekennzeichnet, daß die vertikale Auslenkung der Aufhängepunkte (20) aus einer Ruhelage infolge der oszillierenden Bewegung des zugeordneten Leiterseiles (12) gedämpft wird und daß die Aufhängepunkte (20) jeweils von einer Rückstellkraft in ihre Ruhelage beaufschlagt werden.

2. Schwingungsdämpfer zur Durchführung des Verfahrens gemäß Anspruch 1, mit an Isolatoren angeordneten Aufhängepunkten für die Leiterseile von Freileitungen, dadurch gekennzeichnet, daß eine Feder-Dämpfer-Anordnung (16) vorgesehen ist, welche axial fluchtend am Isolator (14) anschließt und an ihrem dem Isolator (14) abgewandten Ende eine Seilklemme (18) zur Befestigung des Leiterseiles (12) aufweist.

3. Schwingungsdämpfer nach Anspruch 2, dadurch gekennzeichnet, daß in Ruhestellung die Feder-Dämpfer-Anordnung (16) eine Mittellage einnimmt.

4. Schwingungsdämpfer nach Anspruch 2 oder 3, dadurch gekennzeichnet, daß die Feder der Feder-Dämpfer-Anordnung (16) als Schraubenfeder ausgebildet ist und den zugeordneten Dämpfer zylindrisch umfaßt.

5. Schwingungsdämpfer nach einem der Ansprüche 2 bis 4, dadurch gekennzeichnet, daß die Feder und der Dämpfer der Feder-Dämpfer-Anordnung (16) an ihren Enden miteinander verbunden sind und Auslenkungen aus der Ruhelage gemeinsam vollziehen.
